(19)

Europäisches
Patentamt
European
Patent Office
Office européen
des brevets

(11) **EP 2 184 218 B1**

(12) **EUROPEAN PATENT SPECIFICATION**

(45) Date of publication and mention
of the grant of the patent:
**07.09.2011 Bulletin 2011/36**

(51) Int Cl.:
**B62D 5/04** (2006.01)

(21) Application number: **09175402.8**

(22) Date of filing: **09.11.2009**

(54) **Electric power steering apparatus and control method thereof**

Elektrische Servolenkvorrichtung und Steuerungsverfahren dafür

Appareil de direction assistée électrique et son procédé de contrôle

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **10.11.2008 JP 2008287892
16.02.2009 JP 2009032938**

(43) Date of publication of application:
**12.05.2010 Bulletin 2010/19**

(73) Proprietor: **JTEKT Corporation
Osaka-shi
Osaka 542-8502 (JP)**

(72) Inventor: **Aoki, Kaname
c/o JTEKT CORPORATION
Osaka-shi, Osaka 542-8502 (JP)**

(74) Representative: **TBK
Bavariaring 4-6
80336 München (DE)**

(56) References cited:
**FR-A1- 2 819 773     US-A- 6 041 884
US-B1- 6 370 459**

**Description**

BACKGROUND OF THE INVENTION

1. Field of the Invention

The invention relates to an electric power steering apparatus for installation on a vehicle such as an automobile and to a control method thereof, and more particularly to processing the output of a torque sensor used for detecting a steering torque.

2. Description of the Related Art

An electric power steering apparatus is an apparatus that generates a steering assist force with a motor on the basis of a steering torque exerted by a driver on a steering wheel. Where a torque sensor that detects the steering torque in the electric power steering apparatus fails, the control unit of the electric power steering apparatus cannot accurately recognize the steering state. As a result, normal steering assist cannot be performed.

Accordingly, an electric power steering apparatus having two torque sensors and two control means for processing the output from the torque sensors has been suggested. The electric power steering apparatus can conduct normal control with one of torque sensors of one system when the other of torque sensors of the other system fails. (see, for example, Japanese Patent Application Publication No. 11-78943 (JP-A-11-78943) or the corresponding US Application Publication US 6 041 884).

However, providing the torque sensor and control means in two systems is not advisable from the standpoint of production cost and circuit simplification. Further, a pair of Hall integrated circuit (IC) are typically used as a torque sensor. A pair of Hall IC include a first sensor element and a second sensor element. Thus, the sensor output of a torque sensor includes the output of the first sensor and the output of the second sensor. Therefore, the sensor output of the torque sensor becomes a double system. A simultaneous failure of the two Hall IC is highly improbable and usually one of them operates normally when the other fails. Therefore, if it is immediately assumed that the torque sensor has failed and cannot be used when one Hall IC fails, the functions of the torque sensor is not fully utilized where the presence of two Hall IC is taken into account.

SUMMARY OF THE INVENTION

The invention provides a control unit and a control method for an electric power steering apparatus that make it possible to continue conducting steering assist by using a torque sensor even when one sensor element in the torque sensor having a pair of sensor elements has failed.

The electric power steering apparatus according to one aspect of the invention includes a torque sensor including a first sensor element and a second sensor element, a control unit, and a motor. When the first sensor element and the second sensor element are both normal, the first sensor output that is output by the first sensor element and the second sensor output that is output by the second sensor element have a constant correlation corresponding to a steering operation performed by a driver. When at least one of the first sensor element and the second sensor element is abnormal, the control unit executes weighting with respect to the first sensor output and the second sensor output based on the first sensor output and the second sensor output, and calculates a steering torque based on a weighted first sensor output and a weighted second sensor output. The motor generates a steering assist force based on the steering torque.

In the above-described electric power steering apparatus, weighting is performed with respect to each sensor output and the steering torque is calculated on the basis of the weighted sensor outputs even when either one sensor element from among the first sensor element and second sensor element does not output a normal value. As a result, the output of the torque sensor can be used for calculating the steering torque even when at least one of sensor elements is abnormal.

Further, in the above-described electric power steering apparatus, the control unit may calculate an output limit value that limits the steering torque based on the first sensor output and the second sensor output and calculate a target assist torque by limiting the steering torque with the output limit value. As a result, the motor output for assisting the steering control can be reduced. Therefore, safe steering assist control that inhibits the motor output corresponding to the contents of abnormality can be performed.

Further, in the above-described electric power steering apparatus, when a rotation direction of a first torque based on the first sensor output coincides with as rotation direction of a second torque based on the second sensor output and a difference between the first torque and the second torque is larger than a predetermined difference, the control unit may increase, from among the first torque and the second torque, a degree of weighting of one of torques over a degree of weighting of the other of the torques. In addition, the one of the torques is smaller than the other of the torques.. In this case, the calculations are performed by weighting a small torque value. Therefore, the assist of the steering operation can be continued safely.

Further, in the above-described electric power steering apparatus, when a rate of change of at least one of the first sensor output and the second sensor output is equal to or greater than a predetermined threshold, the control unit may increase, from among the first sensor output and the second sensor output, a degree of weighting of a torque based on one of the sensor outputs over a degree of weighting of a torque based on the other of the sensor outputs. In addition, a rate of change of the one of the sensor outputs is smaller than a rate of change of the other of the sensor outputs.. In this case, the calculations are performed by weighting one of the sensor outputs with a small rate of change of the sensor output. Therefore, the effect of the other of the sensor outputs with a large rate of change on the assist of the steering operation can be reduced.

Further, in the above-described electric power steering apparatus; the control unit may prohibit generation of the steering assist force, when a rotation direction of a first torque based on the first sensor output is opposite to a rotation direction of a second torque based on the second sensor output and a difference between the first torque and the second torque is larger than a predetermined difference. In this case, in a state where the rotation direction of the first torque is opposite to the rotation direction of the second torque, even the direction of the steering operation is unclear. Therefore, safety can be ensured by providing no assist to the steering operation.

Further, in the above-described electric power steering apparatus, when at least one of the first sensor output and the second sensor output is outside a range of the sensor output that can be determined when the sensor elements are normal, the control unit may set a degree of weighting for the sensor output of the sensor element that is outside the range of the sensor output to a minimum degree, and may be set the output limit value to a predetermined value such that the motor generates the steering assist force under the steering assist force being limited. In this case, one sensor output that is outside the range of the sensor output realized during normal operation is not used for calculating the steering torque, but the assist of the steering operation can be performed based on the other sensor output. The steering assist force can be reduced by the output limit value.

Further, in the above-described electric power steering apparatus, the control unit may estimate an estimated steering torque based on a vehicle speed, a steering angle, and a yaw rate, and may set a degree of weighting for the first sensor output and the second sensor output based on the estimated steering torque. In this case, the estimated steering torque is estimated from detected values of other sensors installed on the vehicle and weighting of sensor outputs of two sensors elements is conducted based on the estimated steering torque. Therefore, great importance is attached to the sensor output of the sensor element that is highly probable to be normal and safer assist of the ' steering operation can be performed.

Further, in the above-described electric power steering apparatus, the control unit may calculate a first difference between a first torque based on the first sensor output and the estimated steering torque, calculate a second difference between a second torque based on the second sensor output and the estimated steering torque, and increase a degree of weighting of one of the sensor outputs over a degree of weighting of the other of the sensor outputs. Incidentally, the difference of the one of the sensor outputs is smaller than the difference of the other of the sensor outputs, from among the first difference and the second difference. In this case, the control unit determines the degree of abnormality of each sensor output of the sensor elements by the value of the difference with the estimated steering torque and conducts calculations by weighting the sensor output with smaller abnormality. As a result, the assist of the steering operation can be continued more safely.

Further, in the above-described electric power steering apparatus, the control unit may control the motor so as to generate the steering assist force based on the estimated steering torque, when a rotation direction of a first torque based on the first sensor output is opposite to a rotation direction of a second torque based on the second sensor output and a difference between the first torque and the second torque is larger than a predetermined difference. In this case, in a state where the rotation direction of the first torque is opposite to the rotation direction of the second torque, even the direction of the steering operation is unclear. Therefore, an auxiliary assist to the steering operation can be executed based on the estimated steering torque.

Further, in the above-described electric power steering apparatus, an estimated yaw rate calculated based on the detected values of a vehicle speed sensor and a steering angle sensor may be used as the yaw rate. Further, an estimated yaw rate calculated based on the detected values of a vehicle speed sensor and a lateral acceleration sensor may be used as the yaw rate. The yaw rate may be an actual yaw rate detected by a yaw rate sensor. In other words, the yaw rate used for calculating the steering torque may be the estimated yaw rate calculated on the basis of the vehicle speed and the steering angle, or the vehicle speed and the lateral acceleration. The yaw rate used for calculating the steering torque may be the actual yaw rate directly detected by the yaw rate sensor.

With the electric power steering apparatus according to one aspect of the invention, the steering operation can be assisted by continuously using a torque sensor, based on the failure contents, even when one sensor element of the torque sensor has failed. Further, it is possible to notify the driver about the occurrence of malfunction by reducing the steering assist force on the basis of the output limit value.

BRIEF DESCRIPTION OF THE DRAWINGS

The features, advantages, and technical and industrial significance of the this invention will be described in the following detailed description of example embodiments of the invention with reference to the accompanying drawings, in which like numerals denote like elements, and wherein:

FIG. 1 is a drawing showing a schematic configuration of the electric power steering apparatus of the first embodiment of the invention;
FIG 2 is a drawing showing in detail the signal line between the torque sensor and an electronic control unit (ECU);
FIG. 3 is a graph showing the output characteristic of the torque sensor, that is, the relationship between the torque (steering torque) and the sensor output;
FIG. 4 is a flowchart showing the assist control processing in the electric power steering apparatus of the first embodiment;
FIG. 5 is a flowchart of a subroutine showing the details of mode determination;
FIG 6 is a drawing showing a schematic configuration of the electric power steering apparatus of the second embodiment of the invention;
FIG. 7 is a flowchart showing the assist control processing in the electric power steering apparatus of the second embodiment; and
FIG. 8 is a flowchart of a subroutine showing the details of weighting processing.

DETAILED DESCRIPTION OF EMBODIMENTS

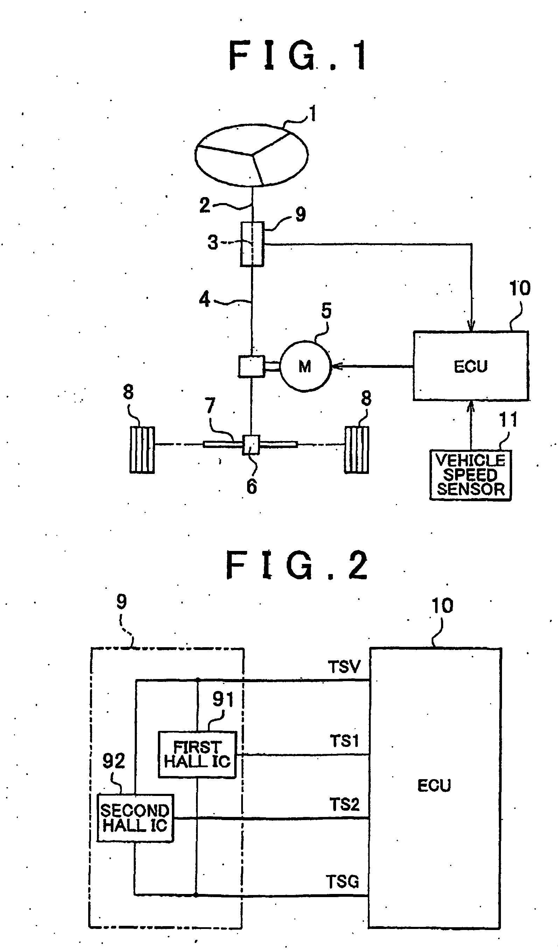

FIG. 1 shows a schematic configuration of the electric power steering apparatus of the first embodiment of the invention. As shown in the figure, a steering wheel 1 that is steered by the driver is connected to a first steering shaft 2. The first steering shaft 2 is connected to a second steering shaft 4 via a torsion bar 3. The revolution of a motor 5 applies a torque to the second steering shaft 4. A pinion 6 is formed at the lower end of the second steering shaft 4, and the pinion 6 engages with a rack 7. A steered angle can be provided to driven wheel (typically front wheels) 8 by the rack 7 moving in the axial direction thereof (lateral direction in the figure).

A torque sensor 9 detects the torsion of the torsion bar 3, that is, the relative difference in rotation angle of the first steering shaft 2 and the second steering shaft 4 as a steering torque. The torque sensor 9 sends the detection output to an ECU (electric control unit) 10 as a control unit. The ECU 10 is a control unit for the electric power steering apparatus. A vehicle speed signal is also input in the ECU 10 from a vehicle speed sensor 11. The ECU 10 drives the motor 5 so as to generate the necessary steering assist force on the basis of the steering torque or vehicle speed.

FIG. 2 shows in detail the signal line between the torque sensor 9 and the ECU 10. The torque sensor 9 is provided with linear-type Hall IC 91 and 92 as a pair of sensor elements. The torque sensor 9 and the ECU 10 are connected by four lines. For example a DC voltage of 5 V is applied from the ECU 10 between a power source terminal TSV and a ground terminal TSG. Sensor outputs (voltages) of the first Hall IC 91 and second Hall IC 92 are generated at the terminals. TS1 and TS2, respectively, corresponding to the steering torque that is to be detected.

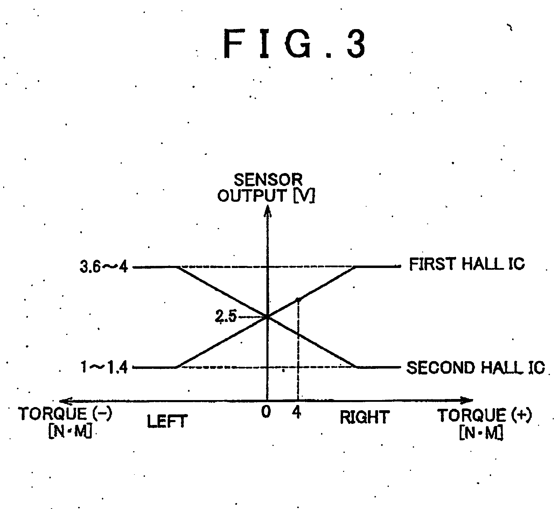

FIG. 3 is a graph showing the output characteristic of the torque sensor 9, that is, the relationship between the torque (steering torque) and the first sensor output of the first Hall IC 91 and the second sensor output of the second Hall IC 92. The torque plotted along the abscissa has a "plus" sign on the right side of the graph with respect to the point of origin in a right steering operation when the steering is conducted to the right from the neutral position and a "minus" sign on the left side of the graph with respect to the point of origin in a left steering operation when the steering is conducted to the left from the neutral position. As shown in the figure, when both Hall ICs function normally, there is a constant correlation between the first sensor output of the first Hall IC 91 and the second sensor output of the second Hall IC 92. More specifically, a characteristic that has a left-right symmetry and a top-bottom symmetry is obtained, when viewed from a neutral point (2.5 V) of each sensor output, this characteristic having an X-like shape with a crossing point in the neutral point with a zero torque.

In each sensor output characteristic, the absolute value of the sensor output changes linearly up to a predetermined torque, and where the predetermined torque is exceeded, the sensor output is saturated. The torque in the saturation point is about ±10 N·m. The upper limit of the sensor output in the saturation region is 3.6 to 4 V and the lower limit is 1 to 1.4 V. Theoretically, the sum total of the two sensor outputs is within a range of (1 + 3.6) to (1.4 + 4) from the numerical value on the graph, but actually it is about 5 V with an error of about ±0.3. All these numerical values are merely examples and they differ depending on the type of the torque sensor. For example, when the sensor elements operate normally, where the first sensor output of the first Hall IC 91 is 3 V, the second sensor output of the second Hall IC 92 is 2 V, and the torque in this case is 4 [N·m] in right steering operation (+). Thus, as long as the two sensor elements are both normal, the value assumed by the second sensor output of the second Hall IC 92 with respect to the first sensor output of the first Hall IC 91 and the value assumed by the first sensor output of the first Hall IC 91 with respect to the second sensor output of the second Hall IC 92 are determined and the converted torque values are the same.

The ECU 10 stores the above-described output characteristic of the torque sensor 9. Therefore, before the absolute value of the torque reaches the saturation point, a torque that is in one-to-one correspondence with sensor outputs can be correctly detected on the basis of a linear change characteristic. However, in order to detect the torque correctly, it has to be assumed that the sensor outputs of both the first Hall IC 91 and the second Hall IC 92 are normal. Thus, it is necessary to determine whether the two sensor outputs are normal. However, in a state where an abnormality has occurred in at least one of the first Hall IC 91 and second Hall IC 92, but the sensor output of the one Hall IC is within a range of 1 to 4 V, it is unclear which sensor output is correct. Therefore, a determination processing that determines how to handle the sensor outputs is required. Accordingly, the operation of the ECU 10 including the aforementioned determination processing will be described below.

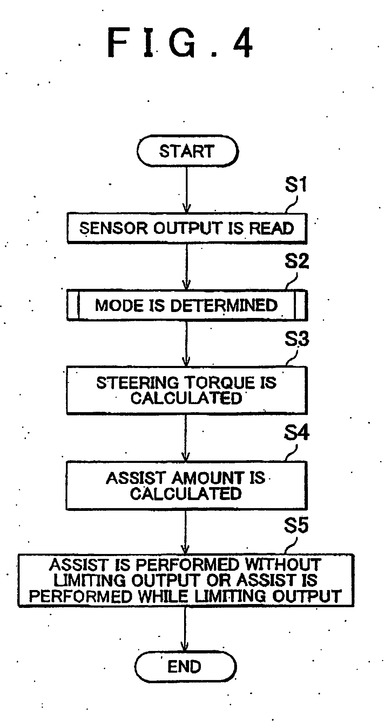

FIG. 4 is a flowchart showing the assist control processing with the electric power steering apparatus that is repeatedly executed by the ECU 10. First, the ECU 10 reads the sensor outputs that are sent from the torque sensor 9 (step S1) and temporarily stores them. In this case, the ECU 10 also reads a vehicle speed signal sent from the vehicle speed sensor 11. The ECU 10 then executes mode determination (step S2). The modes as referred to herein are classified as several states (including normal and abnormal) of the torque sensor as viewed from the standpoint of sensor outputs, as shown for example in Table 1 below.

Table 1

| Mode | Reliability | Output limit coefficient [%] |
|---|---|---|
| M1: Outside the output range | 0 | 50 |
| M2: Difference is too large (same direction) | 3 or 7 | 70 |
| M3: Difference is too large (opposite directions) | 0 | 0 |
| M4: Output changes abruptly | 2 or 8 | 50 |
| M5: Sensor output is fixed | 3 | 70 |
| M6: Normal | 10 | 100 |

In Table 1, "Outside the output range" of mode M1, for example in the example shown in FIG. 3, means that the voltage of a sensor output of at least one of the first Hall IC 91 and the second Hall IC 92 is outside the range of 1 to 4 V. Where the two normal sensor outputs are converted to torques, the same torques have to be obtained. Therefore, where the difference between the two torque values is, for example, greater than $\pm 0.3$ [N·m], it can be said that the "Difference is too large". Further, the sign of torque values based on the first sensor output of the first Hall IC 91 and the second sensor output of the second Hall IC 92 changes, with 2.5 V serving as a boundary. Therefore, where the signs of the torque values (torque (+) or (-) in FIG 3) are the same, the steering directions indicated by the first sensor output of the first Hall IC 91 and the second sensor output of the second Hall IC 92 are the same. Where the signs of the torque values are different, the steering direction indicated by the first sensor output of the first Hall IC 91 is opposite to that indicated by the second sensor output of the second Hall IC 92. Therefore, where the difference is too large when the directions of the first sensor output of the first Hall IC 91 and the second sensor output of the second Hall IC 92 are the same, the mode is M2, and where the difference is too large when the directions of the first sensor output of the first Hall IC 91 and the second sensor output of the second Hall IC 92 are opposite to each other, the mode is M3.

Further, where the sensor output values that were just read out are compared with the sensor output values of the previous reading, it is clear that the sensor outputs vary. Accordingly, a rate of change (amount of change per unit time) of the sensor output in a case where the most abrupt steering is assumed is set as a threshold. Where the rate of change of the sensor output that was just read out exceeds the threshold, "Output changes abruptly" of mode M4 is realized. The output changes abruptly, as referred to herein, when the sensor output indicates abnormally rapid variations that cannot be caused by the usual steering.

A state in which one sensor output varies, whereas the other sensor output remains constant corresponds to "Sensor output is fixed" of mode M5. This is because in some cases the output of the failed Hall IC does not vary even when the torque varies. Further, the case that does not correspond to any of M1 to M5 is represented by mode M6, that is, "Normal".

The ECU 10 stores the reliability of output limit coefficients of Table 1 corresponding to each mode. The reliability as referred to herein is a numerical representation of credibility of sensor output. For example, the maximum value thereof is 10 and the minimum value is 0. This reliability is a weighting factor. The output limit coefficient as referred to herein indicates the proportion of output limit of the steering torque used for assist control when generating the steering assist force with the motor 5. In this example, the maximum output limit coefficient is 100% and the minimum is 0%. The mode M3 in which both the reliability and the output limit coefficient are zero represents the worst state. The next-worst state is represented by the mode M1. The way these numerical values are used will be described below.

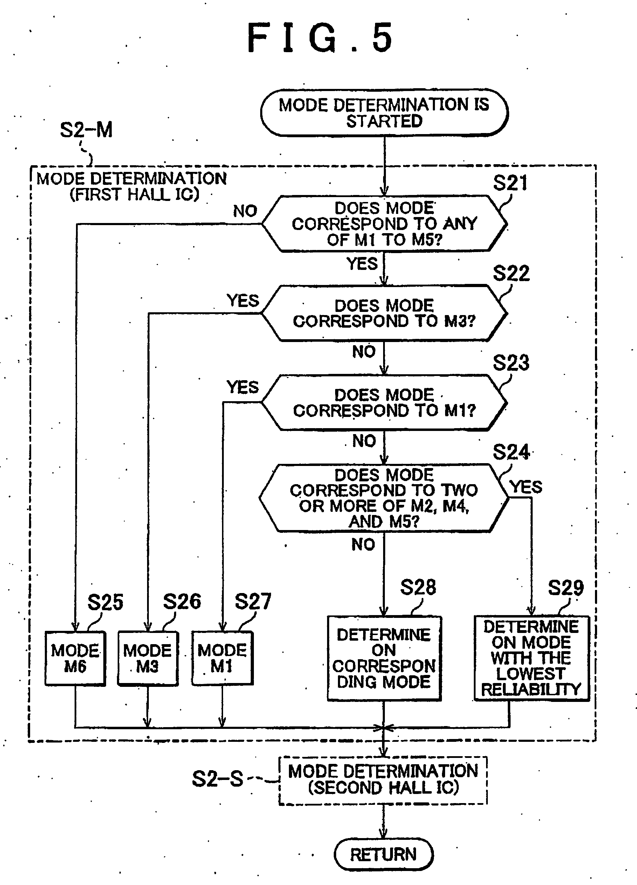

FIG. 5 shows, by way of example, a subroutine showing the details of mode determination of step S2 shown in FIG. 4. Referring to FIG. 5, the ECU 10 performs mode determination of each of the two sensor outputs of the first Hall IC 91 and the second Hall IC 92. First, in mode determination of the first Hall IC 91 (S2-M), the ECU 10 considers the first sensor output of the first Hall IC 91 as the main output and determines whether this output corresponds to any one of the above-described modes M1 to M5 or a plurality thereof on the basis of the first sensor output of the first Hall IC 91 and the second sensor output of the second Hall IC 92 (step S21). In a case where the first sensor output of the first Hall IC 91 does not correspond to any of the modes M1 to M5, the ECU 10 determines that the first sensor output of the first Hall IC 91 represents the mode M6, that is, normal (step S25). In case of the mode M6, the reliability of the first Hall IC 91 is 10 and the output limit coefficient thereof is 100%.

Where the first sensor output of the first Hall IC 91 is found in step S21 to correspond to any of the modes M1 to M5, the ECU 10 then determines whether the first sensor output of the first Hall IC 91 corresponds to the mode M3 (step S22). In a case where the first sensor output of the first Hall IC 91 corresponds to the mode M3, the ECU 10 determines whether the first sensor output of the first Hall IC 91 is in the mode M3, that is, whether the difference is too large (opposite directions) (step S26). In a case of the mode M3, the reliability of the first Hall IC 91 is 0 and the output limit coefficient thereof is 0%. In a case where the difference is too large in the opposite directions, even the direction of the steering is unclear. Therefore, the target assist torque is set to zero and no steering assist force is generated (in other words, no steering assist is conducted with the motor 5), thereby making it possible to ensure safety.

In a case where the first sensor output of the first Hall IC 91 is found not to correspond to the mode M3 in step S22, the ECU 10 then determines whether the first sensor output of the first Hall IC 91 corresponds to the mode M1 (step S23). In a case where the first sensor output of the first Hall IC 91 corresponds to the mode M1, the ECU 10 determines whether the first sensor output of the first Hall IC 91 is in the mode M1, that is, whether the output is "outside the output range" (step S27). In a case of the mode M1, the reliability of the first Hall IC 91 is zero and the output limit coefficient thereof is 50%. In this case, the first sensor output of the first Hall IC 91 that is outside the output range is not used, but the steering assist is possible based on the second sensor output of the second Hall IC 92. By setting the output limit coefficient to 50% and limiting the output when calculating the target assist torque from the steering torque, it is possible to reduce the steering assist force and notify the driver about the occurrence of an abnormality

Where the first sensor output of the first Hall IC 91 is found not to correspond to the mode M1 in step S23, the ECU 10 then determines whether the first sensor output of the first Hall IC 91 corresponds to two or more of the modes M2, M4, and M5 (step S24). Where the first sensor output is determined to correspond to two or more of the aforementioned modes, the ECU 10 determines the first sensor output of the first Hall IC 91 on the mode with the lowest reliability from among the two or more corresponding modes (step S29). In a case where the first sensor output of the first Hall IC 91 corresponds only to any one from among the modes M2, M4, and M5, the ECU 10 determines the first sensor output of the first Hall IC 91 on this corresponding mode (step S28). In a case where the first sensor output of the first Hall IC 91 is determined on the mode M2, when the first sensor output of the first Hall IC 91 (the torque-converted first torque) is larger than the second sensor output of the second Hall IC 92 (the torque-converted second torque); the reliability of the first sensor output of the first Hall IC 91 becomes 3, and when the first sensor output of the first Hall IC 91 (the torque-converted first torque) is smaller than the second sensor output of the second Hall IC 92 (the torque-converted second torque), the reliability of the first sensor output of the first Hall IC 91 becomes 7. In other words, by relying upon a smaller value from among the first torque based on the first sensor output of the first Hall IC 91 and the second torques based on the second sensor output of the second Hall IC 92, it is possible to reduce the effect of error in determining the sensor outputs and ensure safety.

When the first sensor output of the first Hall IC 91 is determined on the mode M4, where the rate of change of the first sensor output of the first Hall IC 91 is greater than the rate of change of the second sensor output of the second Hall IC 92 and the first sensor output changes faster than the second sensor output, the reliability of the first sensor output of the first Hall IC 91 becomes 2. Conversely, where the rate of change of the second sensor output of the second Hall IC 92 is greater than the rate of change of the first sensor output of the first Hall IC 91 and the second sensor output changes faster than the first sensor output, the reliability of the first sensor output of the first Hall IC 91 becomes 8. This is based on the approach according to which the Hall IC with a large degree of abruptness in sensor output variations is less reliable than another Hall IC with a small degree of abruptness in sensor output variations. Conducting calculations by weighting the Hall IC with a small rate of change of output makes it possible to reduce the effect produced by the abruptly changed sensor output on the steering assist force. By the above-described processing, the ECU 10 determines the first sensor output of the first Hall IC 91 on one mode from among the modes M1 to M6.

Then, the ECU 10 executes mode determination (S2-S) of the second Hall IC 92 similarly to the mode determination (S2-M) of the first Hall IC 91. However, in this case, the ECU 10 conducts mode determination on the basis of sensor outputs of the first Hall IC 91 and the second Hall IC 92 by considering the second sensor output of the second Hall IC 92 as the main output. By such a processing, the ECU 10 determines the second sensor output of the second Hall IC 92 on one mode from among the modes M1 to M6.

By mode determination executed with respect to the first Hall IC 91 and the second Hall IC 92, it is possible to find the torque $Tm\_in$ [N·m] read from the first sensor output of the first Hall IC 91, the reliability $Rm$ of the torque $Tm\_in$, and the output limit coefficient $Lm$ [%], and also the torque $Ts\_in$ [N·m] read from the second sensor output of the second Hall IC 92, the reliability $Rs$ of the torque $Ts\_in$, and the output limit coefficient $Ls$ [%].

Returning to FIG. 4, the ECU 10 calculates the steering torque that takes into account the reliability of both sensor outputs of the first Hall IC 91 and the second Hall IC 92 (step S3). The steering torque is calculated by the following Equation (1) where the steering torque to be found is denoted by $T\_in$ [N·m]:

$$T\_in = \{(Tm\_in \times Rm) + (Ts\_in \times Rs)\}/(Rm + Rs) \qquad (1)$$

In a case where the first sensor output of the first Hall IC 91 is determined to be in the mode M6 and the second sensor output of the second Hall IC 92 is determined to be in the mode M6, the sensor outputs of the first Hall IC 91 and the second Hall IC 92 are both not abnormal (normal). Therefore, the reliability of each of the sensor outputs of the first Hall IC 91 and the second Hall IC 92 is set to 10. In this case, the steering torque can be calculated in the following manner from the aforementioned Equation (1).

$$T\_in = \{(Tm\_in \times 10) + (Ts\_in \times 10)\}/20 = (Tm\_in + Ts\_in)/2 \qquad (2)$$

In this equation, $Tm\_in$ is equal to $TS\_in$.

The ECU 10 then calculates the assist amount (step S4). This is the conventional assist control by which a control command value $T\_cal$ relating to the steering torque $T\_in$ is found based on the assist map or the like stored by the ECU 10.

Then, the ECU 10 multiplies the control command value $T\_cal$ by the output limit coefficient $Lm = Ls = 100$ [%] and directly outputs the control command value $T\_cal$ as a target assist torque $T\_out$ serving as an assist torque value (step S5). Thus, where both the first sensor output of the first Hall IC 91 and the second sensor output of the second Hall IC 92 are not abnormal (normal), weighting is meaningless and no output limitation is applied to the target assist torque.

An example in which both the first Hall IC 91 and the second Hall IC 92 are determined to be in the mode M3 (difference is too large, opposite directions) will be described below. For example, where the first torque based on the first sensor output of the first Hall IC 91 is taken as +4 [N·m] and the second torque based on the second sensor output of the second Hall IC 92 is taken as -4 [N·m], the reliabilities of both the first sensor output of the first Hall IC 91 and the second sensor output of the second Hall IC 92 are set to zero and the output limit coefficients are also set to zero percent. Therefore, the steering torque $T\_in$ [N·m] calculated with Equation (1) is $T\_in = 0$. Further, the output limit coefficients of both the first sensor output of the first Hall IC 91 and the second sensor output of the second Hall IC 92 are set to zero and the target assist torque as an assist torque value is zero, that is, no steering assist is performed.

An example in which both the first Hall IC 91 and the second Hall IC 92 are determined to be in the mode M2 (difference is too large, same direction) will be described below. For example, where the first torque based on the first sensor output of the first Hall IC 91 is taken as 4 [N·m] and the second torque based on the second sensor output of the second Hall IC 92 is taken as 3 [N·m], the second torque based on the second Hall IC 92 is less than the first torque based on the first Hall IC 91. Therefore, the reliability of the first sensor output of the first Hall IC 91 is set to 3 and the reliability of the second sensor output of the second Hall IC 92 is set to 7. In this case, the steering torque $T\_in$ [N·m] that takes each reliability into account becomes 3.3, as shown below, based on Equation (1) above.

$$T\_in = (4 \times 3 + 3 \times 7) / (3 + 7) = 3.3.$$

Thus, where the reliability of the second sensor output of the second Hall IC 92 is higher than that of the first sensor output of the first Hall IC 91, the value obtained is close to the torque calculated on the basis of the second sensor output of the second Hall IC 92.

The ECU 10 then calculates the assist amount (step S4). This is the conventional assist control by which a control command value $T\_cal$ relating to the steering torque $T\_in$ is found based on the assist map or the like stored by the ECU 10. For example, the ECU 10 sets the control command value $T\_cal$ relating to the steering torque $T\_in = 3.3$ [N·m] that is determined in the above-described manner to 50 [N·m].

Then, the ECU 10 limits the output by multiplying the control command value T_cal that has been set by the smaller of the output limit coefficients Lm, Ls and finds the target assist torque T_out as an assist torque value that has to be output for steering assist (step S5). In the above-described case, the output limit coefficients Lm, Ls of the first sensor output of the first Hall IC 91 and the second sensor output of the second Hall IC 92 are both 70%. Therefore, the target assist torque T_out is 50 x 0.7 = 35 [N-m].

Thus, even when an abnormality (mode M2) occurs in the torque sensor 9, the appropriate control is possible, without immediately making the assist impossible. When the first torque of the first Hall IC 91 is 4 [N·m], and the second torque of the second Hall IC 92 is 3 [N·m], which of them is the correct value is unclear. However, because both sensor outputs are in the same direction, the steering direction can be specified. For this reason, by increasing the degree of weighting for the sensor output of the Hall IC with a small torque based on the sensor output, it is possible to perform the steering assist to a certain degree.

An example in which the first sensor output of the first Hall IC 91 is determined to be in the mode M1 (outside the output range) and the second sensor output of the second Hall IC 92 is determined to be in the mode M6 (normal) will be explained below. The first sensor output of the first Hall IC 91 will be determined to be 0 V, and the second torque of the second Hall IC 92 will be determined to be Ts_in [N·m] within the normal range. In this case, the reliability of the first sensor output of the first Hall IC 91 is set to zero, and the output limit coefficient based on the first sensor output of the first Hall IC 91 is set to 50%. Further, the reliability of the second sensor output of the second Hall IC 92 is set to 10, and the output limit coefficient based on the second sensor output of the second Hall IC 92 is set to 100%: Therefore, the steering torque T_in [N·m] is calculated in the following manner on the basis of Equation (1) above:

$$T\_in = (Ts\_in \times 10)/10 = Ts\_in.$$

The ECU 10 then calculates the assist amount (step S4) and finds the control command value T_cal relating to the steering torque T_in.

Then, the ECU 10 multiplies the control command value T_cal by the smaller of the output limit coefficients based on the first sensor output of the first Hall IC 91 and the second sensor output of the second Hall IC 92. Thus, where the control command value is multiplied by 50 [%], which is the output limit coefficient based on the first sensor output of the first Hall IC 91, half of the calculated control command value T_cal is output as a target assist torque T_out as the assist torque value (step S5). Thus, even if the steering torque is correctly calculated based on the second sensor output of the normal second Hall IC 92, the occurrence of an abnormality in the first sensor output of the first Hall IC 91 is considered as important, a limitation is placed on the target assist torque that is finally output, and the steering assist force is reduced.

An example in which both the first sensor output of the first Hall IC 91 and the second sensor output of the second Hall IC 92 are determined to be in the mode M4 (output changes abruptly) will be described below In a case where the first torque based on the first sensor output of the first Hall IC 91 changes abruptly from the previous value and becomes 4 [N·m] and the second torque based on the second sensor output of the second Hall IC 92 also changes abruptly but is 3 [N·m], which is less than the first torque of the first Hall IC 91, the reliability of the first sensor output of the first Hall IC 91 that has a high degree of abruptness in variation is set to 2 and the reliability of the second sensor output of the second Hall IC 92 is set to 8. In this case, the steering torque T_in [N·m] that takes into account each reliability can be calculated in the following manner on the basis of Equation (1):

$$T\_in = (4 \times 2 + 3 \times 8) / (2 + 8) = 3.2.$$

Thus, because the reliability of the second sensor output of the second Hall IC 92 is higher than the reliability of the first sensor output of the first Hall IC 91, the steering torque T_in [N·m] assumes a value close to the second torque based on the second sensor output of the second Hall IC 92.

The ECU 10 then calculates the assist amount (step S4) and finds the control command value T_cal relating to the steering torque T_in. For example, the ECU 10 sets the control command value T_cal relating to the above-described steering torque T_in = 3.2 [N·m] to 48 [N·m]. Then, the ECU 10 multiplies the control command value T_cal by the output limit coefficient 50 [%] of the mode M4, thereby limiting the output and finding the target steering torque T_out = 24 [N.m] as the assist torque value that has to be finally output (step S5).

Thus, even when an abnormality (mode M4) occurs in the torque sensor 9, the appropriate control is possible, without immediately making the assist impossible. Since the first torque based on the first sensor output of the first Hall IC 91 changes more abruptly than the second torque based on the second sensor output of the second Hall IC 92, the second torque based on the second sensor output of the second Hall IC 92 cannot be said to be absolutely correct. Therefore, the reliability of the first sensor output of the first Hall IC 91 is set to 2, and the first torque based on the first sensor output of the first Hall IC 91 is also caused to make a contribution to the calculation of the steering torque.

An example in which the first sensor output of the first Hall IC 91 is determined to be in the mode M5 (sensor output is fixed) and the second sensor output of the second Hall IC 92 is determined to be in the mode M6 (normal) will be described below. The first torque based on the first sensor output of the first Hall IC 91 is determined not to change from the previous value and taken as 4 [N·m], and the second torque based on the second sensor output of the second Hall IC 92 is determined to change from the previous value and taken as 3 [N·m]. The reliability of the first sensor output of the first Hall IC 91 is set to 3, and the reliability of the second sensor output of the second Hall IC 92 is set to 10. In this case, the steering torque T_in [N·m] that takes into account each reliability can be calculated in the following manner on the basis of Equation (1):

$$T\_in = (4 \times 3 + 3 \times 10) / (3 + 10) = 3.2.$$

Thus, because the reliability of the second sensor output of the second Hall IC 92 is higher than the reliability of the first sensor output of the first Hall IC 91, the steering torque T_in [N·m] assumes a value close to the second torque of the second Hall IC 92.

The ECU 10 then calculates the assist amount (step S4) and finds the control command value T_cal relating to the steering torque T_in. For example, the ECU 10 takes the control command value T_cal relating to the above-described steering torque T_in = 3.2 [N·m] as 48 [N·m]. Then, the ECU 10 multiplies the control command value T_cal by the output limit coefficient 70 [%] that has been set based on the first sensor output of the first Hall IC 91, thereby limiting the output and finding the target steering torque T_out = 33.6 [N·m] as the assist torque value that has to be finally output to the steering assist (step S5).

Thus, even when an abnormality (mode M5) occurs in the torque sensor 9, the appropriate control is possible, without immediately making the assist impossible. Even though the first torque based on the first sensor output of the first Hall IC 91 does not change, the second torque based on the second sensor output of the second Hall IC 92 cannot be said to be absolutely correct. Therefore, the reliability 3 is also assigned to the first sensor output of the first Hall IC 91, and the first torque based on the first sensor output of the first Hall IC 91 is also caused to make contribution to the calculation of the steering torque.

To sum up, even when an abnormality (modes M1, M2, M4, and M5) occurs in the torque sensor 9, the appropriate control is possible, without immediately making the assist impossible, in the electric power steering apparatus. Therefore, the assist control of the electric power steering apparatus can be continued after limiting the target assist torque. As a result, the double system of sensor output can be used effectively. Further, in the case of the mode M3, enabling the continuous assist control of the electric power steering apparatus is not advantageous. Therefore, the steering assist is stopped.

Thus, in the electric power steering apparatus of the above-described configuration, even when any one of the sensor elements does not output a normal value, the output of the torque sensor 9 can be effectively used by calculating the steering torque on the basis of assigning weights to each sensor output. Further, because the output for steering assist can be reduced on the basis of the output limit that has been set, safe steering assist that is suppressed correspondingly to the contents of abnormality can be performed. Thus, it is possible to provide a control unit of an electric power steering apparatus such that even when one sensor element in the torque sensor 9 fails, the steering assist can be continued by using the torque sensor 9.

In a case where an abnormality occurs in the torque sensor 9, the output limitation reduces the target assist torque and decreases the steering assist force. As a result, the steering becomes heavier and the driver can be informed about the occurrence of abnormality. Additionally the driver may be notified about the abnormality by an alarm display (voice announce is made or a display light of torque sensor failure comes on).

The above-described embodiments present examples of mode determination that can be changed variously, if necessary. Further, the processing conducted according to the flowchart shown in FIG 5 is also merely exemplary and the sequence of mode determination can be changed variously. Further, the output limit coefficients in the above-described embodiments are presented as rates [%], but an upper limit may be also set for the value of the final output corresponding to the mode. In addition, the specifications of weighting and output limitation can be changed with time. For example, the inconvenience of steering suddenly becoming heavier can be reduced by gradually applying the output limit according to the time that has elapsed since the occurrence of abnormality.

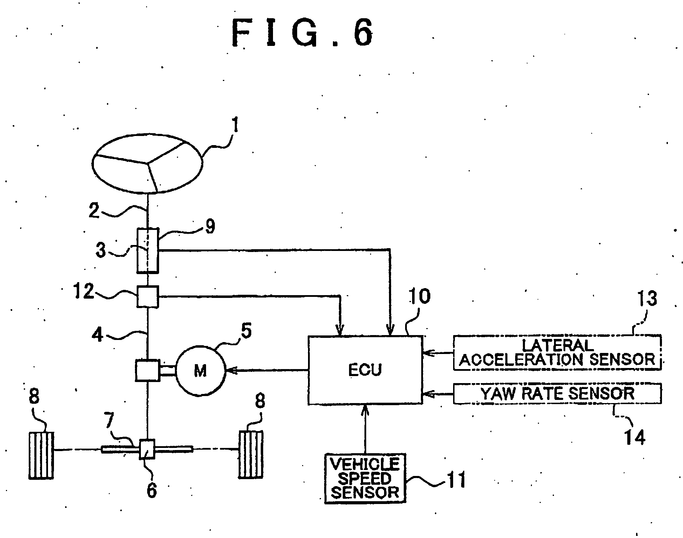

FIG. 6 shows a schematic configuration of the electric power steering apparatus of the second embodiment of the invention. Referring to the figure, a vehicle speed signal from the vehicle speed sensor 11 and a steering angle signal from the steering angle sensor 12 are input to the ECU 10. The steering angle sensor 12 detects the steering angle that is provided to the steered wheels 8. In the configuration shown in FIG. 6, a rotation angle sensor that is provided in the intermediate zone of the second steering shaft 4 and detects the rotation angle of the second steering shaft 4 is used as the steering sensor 12.

As shown by a two-dot-dash line in FIG 6, a lateral acceleration signal from the lateral acceleration sensor 13 or a yaw rate signal from the yaw rate sensor 14 may be also input to the ECU 10. The lateral acceleration sensor 13 detects the acceleration applied in the lateral direction to the turning vehicle. The yaw rate sensor 14 detects an angular speed of rotation applied about a vertical axis passing through the center of gravity to the turning vehicle.

Other features and operation of the electric power steering apparatus shown in FIG. 6 are similar to those of the electric power steering apparatus shown in FIG. 1, and the corresponding structural components arc assigned with reference numerals identical to those shown in FIG 1 and the explanation thereof is omitted.

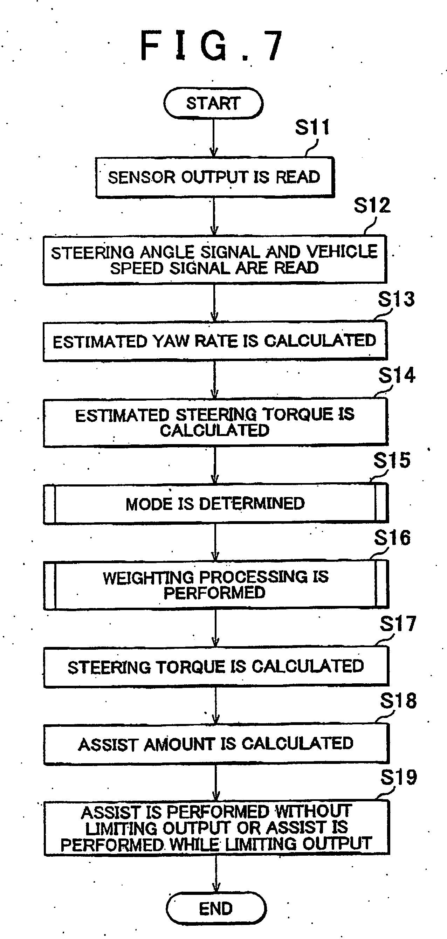

FIG 7 is a flowchart showing the assist control processing that is repeatedly executed by the ECU 10 in the electric power steering apparatus shown in FIG 6. This figure shows the processing conducted in a case where the lateral acceleration sensor 13 and yaw rate sensor 14 are not provided.

First, the ECU 10 reads the sensor outputs that are sent from the torque sensor 9 (step S11) and temporarily stores them. Then, the ECU 10 reads a vehicle speed signal sent from the vehicle speed sensor 11 and a steering angle signal sent from the steering angle sensor 12 (step S12) and calculates an estimated yaw rate by using these signals (step S13).

The estimated yaw rate is calculated by substituting the vehicle speed and steering angle into a conventional calculation formula. In a case where a lateral acceleration sensor 13 is provided, the estimated yaw rate can be calculated using the vehicle speed and the lateral acceleration detected by the lateral acceleration sensor 13. In a case where the yaw rate sensor 14 is provided, it is preferred that the actual yaw rate detected by the yaw rate sensor 14, rather than the estimated yaw rate, be used in the below-described processing.

Then, the ECU 10 calculates an estimated steering torque (step S14). The estimated steering torque is estimated as a sum of a first steering torque that depends on a travel state of the vehicle and a second steering torque that is usually necessary for steering, regardless of the type of travel state. The first steering torque is a torque necessary to surpass a cornering force generated between a thread surface of the wheels 8 and a road surface during turning. The first steering torque is calculated by finding the cornering force on the basis of vehicle speed, steering angle, and estimated yaw rate, and multiplying the found cornering force by a predetermined coefficient. The second steering torque is calculated as a value corresponding to a differential value of an angular rate of steering (second differential of the steering angle).

The ECU 10 then performs mode determination (step S15). The mode determination is conducted in the same manner as in the first embodiment according to the flowchart shown in FIG. 5. As a result, the states of the two sensor elements (first Hall IC 91 and second Hall IC 92) of the torque sensor 9, from among the modes M1 to M6, are determined and reliabilities and output limit coefficients as weighting coefficients relating to the two sensor outputs of the first Hall IC 91 and second Hall IC 92 are set.

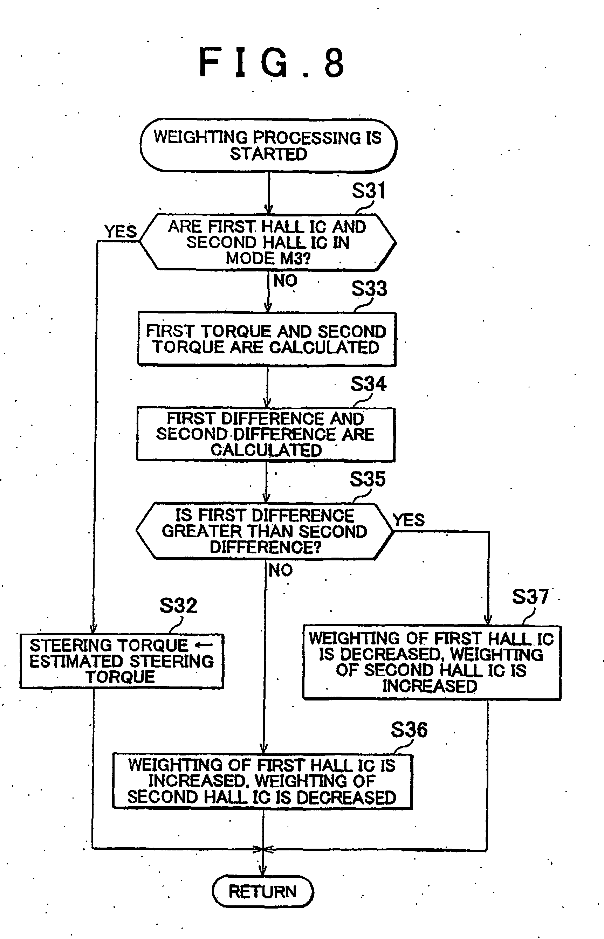

After the above-described mode determination has been completed, the ECU 10 executes the weighting processing based on the estimated steering torque that has been calculated in step S14, according to the sequence shown below (step S16). FIG. 8 is a subroutine showing the details of the weighting processing.

Referring to FIG. 8, the ECU 10 determines the mode of sensor outputs of the first Hall IC 91 and second Hall IC 92 and determines whether the sensor outputs are in the mode M3 (step S31). Where both the first sensor output of the first Hall IC 91 and the second sensor output of the second Hall IC 92 are in the mode M3 (step S31: YES), the ECU 10 sets the estimated steering torque calculated in step S14 as a steering torque (step S32), ends the weighting processing, and returns to the flowchart shown in FIG. 7.

Where neither of the sensor outputs of the first Hall IC 91 and second Hall IC 92 is in the mode M3 (step S31: NO), the ECU 10 calculates the first torque by using the first sensor output of the first Hall IC 91 and calculates the second torque by using the second sensor output of the second Hall IC 92 (step S33). Then, the ECU 10 calculates the difference between the estimated steering torque that has been calculated in step S14 and the first torque (i.e., first difference) and the difference between the estimated steering torque and the second torque (i.e., second difference) (step S34).

The ECU 10 then compares the first difference with the second difference (step S35). Where the first difference is greater than the second difference (step S35: YES), the degree of weighting for the first sensor output of the first Hall IC 91 is decreased and the degree of weighting for the second sensor output of the second Hall IC 92 is increased (step S37). Conversely, where the second difference is greater than the first difference (step S35: NO), the degree of weighting for the first sensor output of the first Hall IC 91 is increased and the degree of weighting for the second sensor output of the second Hall IC 92 is decreased (step S36). After the degrees of weighting have been set in steps S36 and S37, the processing flow returns to the flowchart shown in FIG 7.

In the above-described weighting processing, the degree of abnormality of the first sensor output of the first Hall IC 91 and the second sensor output of the second Hall IC 92 is determined by the value of the difference with the estimated steering torque that has been calculated in the above-descried manner. More specifically, the Hall IC that outputs a sensor output for which a torque close to the estimated steering torque can be obtained (Hall IC that outputs a sensor output for which a torque with a small difference can be obtained) is assumed as the Hall IC that has a minor abnormality and a large degree of weighting is applied to this sensor output. As a result, in the subsequent calculations of steering torque (step S17) and calculations of assist amount (step S18), the calculations is executed to weight the Hall IC with a minor abnormality and therefore the steering assist can be continued with a higher degree of safety.

The degree of weighting that is set in step S36 or step S37 may be a predetermined fixed value or can be also set variably correspondingly to the degree of the difference obtained by comparison in step S35. As a result, calculations can be conducted to weight the Hall IC with a minor abnormality.

The ECU 10 that has completed the above-described weighting processing returns the processing flow to the flowchart shown in FIG. 7, calculates the steering torque (step S17), calculates the assist amount (step S18), drives the motor 5 on the basis of the calculation result of the assist amount and executes the steering assist (step S19). The calculation of the steering torque in step S17 is executed similarly to the calculation of the steering torque in step S3 of the flowchart shown in FIG 4. Further, the calculation of the assist amount in step S18 is likewise executed similarly to the calculation of the steering torque in step S4. In this case, the degree of weighting determined in the weighting processing (S16) is used together with the degree of weighting determined in the mode determination processing (S15) and then the output limitation determined in the mode determination processing (S15) is executed.

In a case where the sensor outputs of the first Hall IC 91 and the second Hall IC 92 are determined to be in the mode M3 as a result of executing the weighting processing (S16), the estimated steering torque that has been calculated in step S14 is set as the steering torque. In this case, the steering torque calculated in step S17 becomes the estimated steering torque that has been calculated as described hereinabove, calculation of the assist amount using the estimated steering torque is performed, and the steering assist based on the calculation results is executed.

In the first embodiment, the steering assist is not performed in a case when both the first sensor output of the first Hall IC 91 and the second sensor output of the second Hall IC 92 are in the mode M3. However, in the second embodiment, the steering assist control can be continued even in this case by using the estimated steering torque, and the steering feel can be prevented from changing abruptly following the sudden occurrence of abnormality. This control is an auxiliary control based on the estimated steering torque, and the diver may be notified about the occurrence of the abnormality by an alarm display (voice announce is made or a display light comes on).

An electric power steering apparatus includes a torque sensor (9) including a first sensor element (91) and a second sensor element (92), a control unit (10), and a motor (5). When the first sensor element (91) and the second sensor element (92) are both normal, the first sensor output that is output by the first sensor element (91) and the second sensor output that is output by the second sensor element (92) have a predetermined correlation corresponding to a steering operation performed by a driver. When the first sensor element (91) or the second sensor element (92) is abnormal, the control unit (10) executes weighting with respect to the first sensor output and the second sensor output and calculates a steering torque on the basis of the weighted first sensor output and the weighted second sensor output.

## Claims

1. An electric power steering apparatus **characterized by** comprising:

   a torque sensor (9) including a first sensor element (91) and a second sensor element (92), wherein a first sensor output that is output by the first sensor element (91) and a second sensor output that is output by the second sensor element (92) have a predetermined correlation corresponding to la steering operation performed by a driver when the first sensor element (91) and the second sensor element (92) are both normal;
   la control unit (10) that executes weighting with respect to the first sensor output and the second sensor output based on the first sensor output and the second sensor output and that calculates a steering torque based on a weighted first sensor output and a weighted second sensor output when at least one of the first sensor element (91) and the second sensor element (92) is abnormal; and
   a motor (5) that generates a steering assist force based on the steering torque.

2. The electric power steering apparatus according to claim 1, wherein
   the control unit (10) calculates an output limit value that limits the steering torque based on the first sensor output and the second sensor output, calculates a target assist torque by limiting the steering torque with the output limit value, and controls the motor (5) so as to generate the steering assist force based on the target assist torque.

3. The electric power steering apparatus according to claim 1 or 2, wherein
   when a rotation direction of a first torque based on the first sensor output coincides with a rotation direction of a second torque based on the second sensor output and a difference between the first torque and the second torque is larger than a predetermined difference,
   the control unit (10) increases, from among the first torque and the second torque, a degree of weighting of one of the torques over a degree of weighting of the other of the torques, wherein the one of the torques is smaller than the other of the torques.

4. The electric power steering apparatus according to.any one of claims 1 to 3, wherein
when a change ratio of at least one of the first sensor output and the second sensor output is equal to or greater than a predetermined threshold,
the control unit (10) increases, from among the first sensor output and the second sensor output, a degree of weighting of a torque based on one of the sensor outputs over a degree of weighing of a torque based on the other of the sensor outputs, wherein the change ratio of the one of the sensor outputs is smaller than the change ratio of the other of the sensor outputs.

5. The electric power steering apparatus according to any one of claims 1 to 4, wherein
the control unit (10) prohibits generation of the steering assist force, when a rotation direction of a first torque based on the first sensor output is opposite to a rotation direction of a second torque based on the second sensor output and a difference between the first torque and the second torque is larger than a predetermined difference.

6. The electric power steering apparatus according to any one of claims 2 to 4, wherein
when at least one of the first sensor output and the second sensor output is outside a range of the sensor output that can be determined when the sensor elements (91, 92) are normal,
the control unit (10) sets a degree of weighting for the sensor output of the sensor element (91, 92) that is outside the range of the sensor output to a minimum degree, and sets the output limit value to a predetermined value such that the motor (5) can generate the steering assist force under the steering assist force being limited.

7. The electric power steering apparatus according to any one of claims 1 to 6, wherein
the control unit (10) estimates an estimated steering torque based on a vehicle speed, a steering angle, and a yaw rate, and sets a degree of weighting for the first sensor output and the second sensor output based on the estimated steering torque.

8. The electric power steering apparatus according to claim 7, wherein
the control unit (10) calculates a first difference between a first torque based on the first sensor output and the estimated steering torque, calculates a second difference between a second torque based on the second sensor output and the estimated steering torque, and increases a degree of weighting of one of the sensor outputs over a degree of weighting of the other of the sensor outputs, wherein the difference of the one of the sensor outputs is smaller than the difference of the other of the sensor outputs, from among the first difference and the second difference.

9. The electric power steering apparatus according to claim 8, wherein
the control unit (10) controls the motor (5) so as to generate the steering assist force based on the estimated steering torque, when a rotation direction of a first torque based on the first sensor output is opposite to a rotation direction of a second torque based on the second sensor output and the difference between the first torque and the second torque is larger than a predetermined difference.

10. The electric power steering apparatus according to any one of claims 7 to 9, further comprising:

    a vehicle speed sensor (11) that detects the vehicle speed; and
    a steering angle sensor (12) that detects the steering angle,
    wherein the control unit (10) estimates the yaw rate based on the vehicle speed and the steering angle.

11. The electric power steering apparatus according to any one of claims 7 to 9, further comprising:

    a vehicle speed sensor (11) that detects the vehicle speed; and
    a lateral acceleration sensor (13) that detects a lateral acceleration,
    wherein the controls unit (10) estimates the yaw rate based on the vehicle speed and the lateral acceleration.

12. The electric power steering apparatus according to any one of claims 7 to 9, further comprising:

    a yaw rate sensor (14) that detects an actual yaw rate of a vehicle.

**13.** A method for controlling an electric power steering apparatus having a torque sensor (9) including a first sensor element (91) and a second sensor element (92), and a motor (5), a first sensor output that is output by the first sensor element (91) and the second sensor output that is output by the second sensor element (92) have a predetermined correlation corresponding to a steering operation performed by a driver when the first sensor element (91) and the second sensor element (92) are both normal,
the method being **characterized by** comprising:

determining whether at least one of the first sensor element (91) and the second sensor element (92) is normal;
executing weighting with respect to the first sensor output and the second sensor output based on the first sensor output and the second sensor output;
calculating a steering torque based on a weighted first sensor output and a weighted second sensor output; and
controlling the motor (5) so as to generate a steering assist force based on the steering torque.

**Patentansprüche**

**1.** Elektrische Servolenkungsvorrichtung, **gekennzeichnet durch**:

einen Drehmomentsensor (9) einschließlich einem ersten Sensorelement (91) und einem zweiten Sensorelement (92), wobei eine von dem ersten Sensorelement (91) ausgegebene erste Sensorausgabe und eine von dem zweiten Sensorelement (92) ausgegebene zweite Sensorausgabe eine vorbestimmte Korrelation aufweisen, die einer von einem Fahrer durchgeführten Lenkungsoperation entspricht, wenn sowohl das erste Sensorelement (91) als auch das zweite Sensorelement (92) normal sind;
eine Steuerungseinheit (10), die eine Gewichtung mit Bezug auf die erste Sensorausgabe und die zweite Sensorausgabe basierend auf der ersten Sensorausgabe und der zweiten Sensorausgabe ausführt, und die ein Lenkungsdrehmoment basierend auf einer gewichteten ersten Sensorausgabe und einer gewichteten zweiten Sensorausgabe berechnet, wenn zumindest eines des ersten Sensorelements (91) und des zweiten Sensorelements (92) abnormal ist; und
einen Motor (5), der eine Lenkungsunterstützungskraft basierend auf dem Lenkungsdrehmoment erzeugt.

**2.** Elektrische Servolenkungsvorrichtung nach Anspruch 1, wobei
die Steuerungseinheit (10) einen Ausgabebegrenzungswert basierend auf der ersten Sensorausgabe und der zweiten Sensorausgabe berechnet, der das Lenkungsdrehmoment begrenzt, ein Sollunterstützungsdrehmoment durch Begrenzen des Lenkungsdrehmoments mit dem Ausgabebegrenzungswert berechnet, und den Motor (5) steuert, um die Lenkungsunterstützungskraft basierend auf dem Sollunterstützungsdrehmoment zu erzeugen.

**3.** Elektrische Servolenkungsvorrichtung nach Anspruch 1 oder 2, wobei
wenn eine Drehrichtung eines ersten Drehmoments basierend auf der ersten Sensorausgabe mit einer Drehrichtung eines zweiten Drehmoments basierend auf der zweiten Sensorausgabe übereinstimmt, und eine Differenz zwischen dem ersten Drehmoment und dem zweiten Drehmoment größer als eine vorbestimmte Differenz ist,
die Steuerungseinheit (10) unter dem ersten Drehmoment und dem zweiten Drehmoment einen Gewichtungsgrad eines der Drehmomente über einen Gewichtungsgrad des anderen der Drehmomente erhöht, wobei das eine der Drehmomente kleiner als das andere der Drehmomente ist.

**4.** Elektrische Servolenkungsvorrichtung nach einem der Ansprüche 1 bis 3, wobei
wenn eine Änderungsrate von zumindest einem der ersten Sensorausgabe und der zweiten Sensorausgabe gleich oder größer als ein vorbestimmter Schwellenwert ist,
die Steuerungseinheit (10) unter der ersten Sensorausgabe und der zweiten Sensorausgabe einen Gewichtungsgrad eines Drehmoments basierend auf einer der Sensorausgaben über einen Gewichtungsgrad eines Drehmoments basierend auf der anderen der Sensorausgaben erhöht, wobei die Änderungsrate der einen der Sensorausgaben kleiner als die Änderungsrate der anderen der Sensorausgaben ist.

**5.** Elektrische Servolenkungsvorrichtung nach einem der Ansprüche 1 bis 4, wobei
die Steuerungseinheit (10) eine Erzeugung der Lenkungsunterstützungskraft verhindert, wenn eine Drehrichtung eines ersten Drehmoments basierend auf der ersten Sensorausgabe einer Drehrichtung eines zweiten Drehmoments basierend auf der zweiten Sensorausgabe entgegengesetzt ist, und eine Differenz zwischen dem ersten Drehmoment und dem zweiten Drehmoment größer als eine vorbestimmte Differenz ist.

6. Elektrische Servolenkungsvorrichtung nach einem der Ansprüche 2 bis 4, wobei
   wenn zumindest eine der ersten Sensorausgabe und der zweiten Sensorausgabe außerhalb eines Bereichs der Sensorausgabe liegt, der bestimmt werden kann, wenn die Sensorelemente (91, 92) normal sind, die Steuerungseinheit (10) einen Gewichtungsgrad für die außerhalb des Bereichs der Sensorausgabe liegende Sensorausgabe des Sensorelements (91, 92) auf einen minimalen Grad einstellt, und den Ausgabebegrenzungswert auf einen vorbestimmten Wert derart einstellt, dass der Motor (5) die Lenkungsunterstützungskraft erzeugen kann, wobei die Lenkungsunterstützungskraft begrenzt ist.

7. Elektrische Servolenkungsvorrichtung nach einem der Ansprüche 1 bis 6, wobei
   die Steuerungseinheit (10) ein geschätztes Lenkungsdrehmoment basierend auf einer Fahrzeuggeschwindigkeit, einem Lenkungswinkel, und einer Giergeschwindigkeit schätzt, und einen Gewichtungsgrad für die erste Sensorausgabe und die zweite Sensorausgabe basierend auf dem geschätzten Lenkungsdrehmoment einstellt.

8. Elektrische Servolenkungsvorrichtung nach Anspruch 7, wobei
   die Steuerungseinheit (10) eine erste Differenz zwischen einem ersten Drehmoment basierend auf der ersten Sensorausgabe und dem geschätzten Lenkungsdrehmoment berechnet, eine zweite Differenz zwischen einem zweiten Drehmoment basierend auf der zweiten Sensorausgabe und dem geschätzten Lenkungsdrehmoment berechnet, und einen Gewichtungsgrad einer der Sensorausgaben über einen Gewichtungsgrad der anderen der Sensorausgaben erhöht, wobei unter der ersten Differenz und der zweiten Differenz die Differenz der einen der Sensorausgaben kleiner als die Differenz der anderen der Sensorausgaben ist.

9. Elektrische Servolenkungsvorrichtung nach Anspruch 8, wobei
   die Steuerungseinheit (10) den Motor (5) steuert, um die Lenkungsunterstützungskraft basierend auf dem geschätzten Lenkungsdrehmoment zu erzeugen, wenn eine Drehrichtung eines ersten Drehmoments basierend auf der ersten Sensorausgabe einer Drehrichtung eines zweiten Drehmoments basierend auf der zweiten Sensorausgabe entgegengesetzt ist, und die Differenz zwischen dem ersten Drehmoment und dem zweiten Drehmoment größer als eine vorbestimmte Differenz ist.

10. Elektrische Servolenkungsvorrichtung nach einem der Ansprüche 7 bis 9, ferner mit:

    einem Fahrzeuggeschwindigkeitssensor (11), der die Fahrzeuggeschwindigkeit erfasst; und
    einem Lenkungswinkelsensor (12), der den Lenkungswinkel erfasst,
    wobei die Steuerungseinheit (10) die Giergeschwindigkeit basierend auf der Fahrzeuggeschwindigkeit und dem Lenkungswinkel schätzt.

11. Elektrische Servolenkungsvorrichtung nach einem der Ansprüche 7 bis 9, ferner mit:

    einem Fahrzeuggeschwindigkeitssensor (11), der die Fahrzeuggeschwindigkeit erfasst; und
    einem Querbeschleunigungssensor (13), der eine Querbeschleunigung erfasst,
    wobei die Steuerungseinheit (10) die Giergeschwindigkeit basierend auf der Fahrzeuggeschwindigkeit und der Querbeschleunigung schätzt.

12. Elektrische Servolenkungsvorrichtung nach einem der Ansprüche 7 bis 9, ferner mit:

    einem Giergeschwindigkeitssensor (14), der eine tatsächliche Giergeschwindigkeit eines Fahrzeugs erfasst.

13. Verfahren zum Steuern einer elektrischen Servolenkungsvorrichtung mit einem Drehmomentsensor (9) einschließlich einem ersten Sensorelement (91) und einem zweiten Sensorelement (92), und einem Motor (5), wobei eine von dem ersten Sensorelement (91) ausgegebene erste Sensorausgabe und eine von dem zweiten Sensorelement (92) ausgegebene zweite Sensorausgabe eine vorbestimmte Korrelation aufweisen, die einer von einem Fahrer durchgeführten Lenkungsoperation entspricht, wenn sowohl das erste Sensorelement (91) als auch das zweite Sensorelement (92) normal sind,
    **gekennzeichnet durch**
    Bestimmen, ob zumindest eines des ersten Sensorelements (91) und des zweiten Sensorelements (92) normal ist;
    Ausführen einer Gewichtung mit Bezug auf die erste Sensorausgabe und die zweite Sensorausgabe basierend auf der ersten Sensorausgabe und der zweiten Sensorausgabe;
    Berechnen eines Lenkungsdrehmoments basierend auf einer gewichteten ersten Sensorausgabe und einer gewichteten zweiten Sensorausgabe; und

Steuern des Motors (5), um eine Lenkungsunterstützungskraft basierend auf dem Lenkungsdrehmoment zu erzeugen.

**Revendications**

1.  Direction à assistance électrique **caractérisée en ce qu'**elle comporte :

    un capteur de couple (9) comprenant un premier élément de capteur (91) et un deuxième élément de capteur (92), une première sortie de capteur qui est délivrée par le premier élément de capteur (91) et une deuxième sortie de capteur qui est délivrée par le deuxième élément de capteur (92) ayant une corrélation prédéterminée correspondant à une opération de direction réalisée par un conducteur quand le premier élément de capteur (91) et le deuxième élément de capteur (92) sont tous les deux normaux ;
    une unité de commande (10) qui exécute une pondération par rapport à la première sortie de capteur et la deuxième sortie de capteur sur la base de la première sortie de capteur et de la deuxième sortie de capteur et qui calcule un couple de direction sur la base d'une première sortie de capteur pondérée et d'une deuxième sortie de capteur pondérée quand au moins une du premier élément de capteur (91) et du deuxième élément de capteur (92) est anormal ; et
    un moteur (5) qui génère une force d'assistance de direction sur la base du couple de direction.

2.  Direction à assistance électrique selon la revendication 1, dans laquelle
    l'unité de commande (10) calcule une valeur limite de sortie qui limite le couple de direction sur la base de la première sortie de capteur et de la deuxième sortie de capteur, calcule un couple d'assistance visé en limitant le couple de direction avec la valeur limite de sortie, et commande le moteur (5) de façon à générer la force d'assistance de direction sur la base du couple d'assistance visé.

3.  Direction à assistance électrique selon la revendication 1 ou 2, dans laquelle
    quand une direction de rotation d'un premier couple sur la base de la première sortie de capteur coïncide avec une direction de rotation d'un deuxième couple sur la base de la deuxième sortie de capteur et une différence entre le premier couple et le deuxième couple est plus grande qu'une différence prédéterminée,
    l'unité de commande (10) augmente, parmi le premier couple et le deuxième couple, un degré de pondération d'un des couples au-dessus d'un degré de pondération de l'autre des couples, l'un des couples étant plus petit que l'autre.

4.  Direction à assistance électrique selon l'une quelconque des revendications 1 à 3, dans laquelle
    quand un rapport de changement d'au moins une de la première sortie de capteur et de la deuxième sortie de capteur est égal ou supérieur à un seuil prédéterminé,
    l'unité de commande (10) augmente, parmi la première sortie de capteur et la deuxième sortie de capteur, un degré de pondération d'un couple sur la base d'une des sorties de capteur au-dessus d'un degré de pondération d'un couple sur la base de l'autre des sorties de capteur, le rapport de changement de l'une des sorties de capteur étant plus petit que le rapport de changement de l'autre des sorties de capteur.

5.  Direction à assistance électrique selon l'une quelconque des revendications 1 à 4, dans laquelle
    l'unité de commande (10) interdit la génération de la force d'assistance de direction, quand une direction de rotation d'un premier couple sur la base de la première sortie de capteur est opposée à une direction de rotation d'un deuxième couple sur la base de la deuxième sortie de capteur et une différence entre le premier couple et le deuxième couple est plus grande qu'une différence prédéterminée.

6.  Direction à assistance électrique selon l'une quelconque de revendications 2 à 4, dans laquelle
    quand au moins une de la première sortie de capteur et de la deuxième sortie de capteur est en dehors d'une plage de la sortie de capteur qui peut être déterminée quand les éléments de capteur (91, 92) sont normaux,
    l'unité de commande (10) détermine un degré de pondération pour la sortie de capteur de l'élément de capteur (91, 92) qui est en dehors de la plage de la sortie de capteur à un degré minimum, et détermine la valeur limite de sortie à une valeur prédéterminée de telle sorte que le moteur (5) peut générer la force d'assistance de direction en dessous de la force d'assistance de direction qui est limitée.

7.  Direction à assistance électrique selon l'une quelconque des revendications 1 à 6, dans laquelle
    l'unité de commande (10) estime un couple de direction estimé sur la base d'une vitesse de véhicule, d'un angle de direction, et un taux de lacet, et détermine un degré de pondération pour la première sortie de capteur et la deuxième sortie de capteur sur la base du couple de direction estimé.

8. Direction à assistance électrique selon la revendication 7, dans laquelle
l'unité de commande (10) calcule une première différence entre un premier couple sur la base de la première sortie de capteur et le couple de direction estimé, calcule une deuxième différence entre un deuxième couple sur la base de la deuxième sortie de capteur et le couple de direction estimé, et augmente un degré de pondération d'une des sorties de capteur au-dessus d'un degré de pondération de l'autre des sorties de capteur, la différence de l'une des sorties de capteur étant plus petite que la différence de l'autre des sorties de capteur, parmi la première différence et la deuxième différence.

9. Direction à assistance électrique selon la revendication 8, dans laquelle
l'unité de commande (10) commande le moteur (5) de façon à générer la force d'assistance de direction sur la base du couple de direction estimé, quand une direction de rotation d'un premier couple sur la base de la première sortie de capteur est opposée à une direction de rotation d'un deuxième couple sur la base de la deuxième sortie de capteur et la différence entre le premier couple et le deuxième couple est plus grande qu'une différence prédéterminée.

10. Direction à assistance électrique selon l'une quelconque des revendications 7 à 9, comportant en outre :

un capteur de vitesse de véhicule (11) qui détecte la vitesse de véhicule ; et
un capteur d'angle de direction (12) qui détecte l'angle de direction,
l'unité de commande (10) estimant le taux de lacet sur la base de la vitesse de véhicule et de l'angle de direction.

11. Direction à assistance électrique selon l'une quelconque des revendications 7 à 9, comportant en outre :

un capteur de vitesse de véhicule (11) qui détecte la vitesse de véhicule ; et
un capteur d'accélération latérale (13) qui détecte une accélération latérale,
l'unité de commande (10) estimant le taux de lacet sur la base de la vitesse de véhicule et de l'accélération latérale.

12. Direction à assistance électrique selon l'une quelconque des revendications 7 à 9, comportant en outre :

un capteur de taux de lacet (14) qui détecte un taux de lacet réel d'un véhicule.

13. Procédé de commande d'une direction à assistance électrique ayant un capteur de couple (9) comprenant un premier élément de capteur (91) et un deuxième élément de capteur (92), et un moteur (5), une première sortie de capteur qui est délivrée par le premier élément de capteur (91) et la deuxième sortie capteur qui est délivrée par le deuxième élément de capteur (92) ont une corrélation prédéterminée correspondant à une opération de direction réalisée par un conducteur quand le premier élément de capteur (91) et le deuxième élément de capteur (92) sont tous les deux normaux,
le procédé étant **caractérisé en ce qu'**il comporte le fait de :

déterminer si au moins un du premier élément de capteur (91) et du deuxième élément de capteur (92) est normal ;
exécuter une pondération par rapport à la première sortie de capteur et à la deuxième sortie de capteur sur la base de la première sortie de capteur et de la deuxième sortie de capteur ;
calculer un couple de direction sur la base d'une première sortie de capteur pondérée et d'une deuxième sortie de capteur pondérée : et
commander le moteur (5) de façon à générer une force d'assistance de direction sur la base du couple de direction.

# FIG.1

# FIG.2

# FIG.3

# F I G . 4

```
        ( START )
             │              S1
             ▼
 ┌───────────────────────────┐
 │  SENSOR OUTPUT IS READ     │
 └───────────────────────────┘
             │              S2
             ▼
 ┌───────────────────────────┐
 │  MODE IS DETERMINED        │
 └───────────────────────────┘
             │              S3
             ▼
 ┌───────────────────────────┐
 │   STEERING TORQUE IS       │
 │      CALCULATED            │
 └───────────────────────────┘
             │              S4
             ▼
 ┌───────────────────────────┐
 │   ASSIST AMOUNT IS         │
 │      CALCULATED            │
 └───────────────────────────┘
             │              S5
             ▼
 ┌───────────────────────────────┐
 │ ASSIST IS PERFORMED WITHOUT    │
 │  LIMITING OUTPUT OR ASSIST IS  │
 │ PERFORMED WHILE LIMITING OUTPUT│
 └───────────────────────────────┘
             │
             ▼
         (  END  )
```

# FIG.5

S2-M

```
┌─────────────────────────────────────────────────────────────────┐
│ MODE DETERMINATION                                    S21         │
│ (FIRST HALL IC)                                                   │
│              NO    DOES MODE                                      │
│         ◄──────────CORRESPOND TO ANY                             │
│                    OF M1 TO M5?                                  │
│                         │ YES                        S22         │
│              YES     DOES MODE                                    │
│         ◄────────────CORRESPOND TO M3?                           │
│                         │ NO                         S23         │
│              YES     DOES MODE                                    │
│         ◄────────────CORRESPOND TO M1?                           │
│                         │ NO                         S24         │
│                      DOES MODE                                    │
│                      CORRESPOND TO TWO        YES                │
│                      OR MORE OF M2, M4, ─────────►              │
│                      AND M5?                                     │
│                         │ NO                                     │
│                                                                  │
│  S25      S26      S27            S28              S29           │
│ ┌─────┐ ┌─────┐ ┌─────┐  ┌──────────┐  ┌──────────┐            │
│ │MODE │ │MODE │ │MODE │  │DETERMINE │  │DETERMINE │            │
│ │ M6  │ │ M3  │ │ M1  │  │   ON     │  │ ON MODE  │            │
│ └─────┘ └─────┘ └─────┘  │CORRESPON │  │WITH THE  │            │
│                          │DING MODE │  │ LOWEST   │            │
│                          └──────────┘  │RELIABILITY│           │
│                                        └──────────┘            │
└─────────────────────────────────────────────────────────────────┘
```

MODE DETERMINATION IS STARTED

S2-S ──── ┌ ─ ─ ─ ─ ─ ─ ─ ─ ─ ─ ─ ┐
          │ MODE DETERMINATION     │
          │ (SECOND HALL IC)       │
          └ ─ ─ ─ ─ ─ ─ ─ ─ ─ ─ ─ ┘

RETURN

# FIG.6

# F I G . 7

START

S11

SENSOR OUTPUT IS READ

S12

STEERING ANGLE SIGNAL AND VEHICLE
SPEED SIGNAL ARE READ

S13

ESTIMATED YAW RATE IS CALCULATED

S14

ESTIMATED STEERING TORQUE IS
CALCULATED

S15

MODE IS DETERMINED

S16

WEIGHTING PROCESSING IS
PERFORMED

S17

STEERING TORQUE IS CALCULATED

S18

ASSIST AMOUNT IS CALCULATED

S19

ASSIST IS PERFORMED WITHOUT
LIMITING OUTPUT OR ASSIST IS
PERFORMED WHILE LIMITING OUTPUT

END

# F I G . 8

```
┌─────────────────────────────┐
│  WEIGHTING PROCESSING IS    │
│         STARTED             │
└─────────────────────────────┘
              │            S31
              ▼
        ╱ARE FIRST HALL IC AND╲  ◄─── YES
YES ◄──╱  SECOND HALL IC IN    ╲
        ╲      MODE M3?        ╱
         ╲────────────────────╱
              │ NO      S33
              ▼
   ┌─────────────────────────┐
   │ FIRST TORQUE AND SECOND │
   │  TORQUE ARE CALCULATED  │
   └─────────────────────────┘
              │          S34
              ▼
   ┌─────────────────────────┐
   │   FIRST DIFFERENCE AND  │
   │  SECOND DIFFERENCE ARE  │
   │       CALCULATED        │
   └─────────────────────────┘
              │          S35
              ▼
        ╱IS FIRST DIFFERENCE ╲  YES
       ╱ GREATER THAN SECOND  ╲───►
       ╲     DIFFERENCE?      ╱
        ╲────────────────────╱
              │ NO
```

S32

```
┌─────────────────────────┐
│ STEERING TORQUE ←       │
│ ESTIMATED STEERING      │
│       TORQUE            │
└─────────────────────────┘
```

S37

```
┌─────────────────────────┐
│ WEIGHTING OF FIRST HALL IC │
│ IS DECREASED, WEIGHTING │
│  OF SECOND HALL IC IS   │
│       INCREASED         │
└─────────────────────────┘
```

S36

```
┌─────────────────────────────┐
│ WEIGHTING OF FIRST HALL IC IS │
│   INCREASED, WEIGHTING OF   │
│ SECOND HALL IC IS DECREASED │
└─────────────────────────────┘
```

```
┌─────────┐
│ RETURN  │
└─────────┘
```

**EP 2 184 218 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11078943 A
- US 6041884 A